# FASCICULE DE BREVET EUROPEEN

(11) **EP 1 877 657 B1**
(45) Date de publication et mention de la délivrance du brevet: **28.11.2012**
(21) Numéro de dépôt: 06743841.6
(22) Date de dépôt: 25.04.2006
(51) Int. Cl.: F02D 41/02, F01N 3/025, F01N 3/035

(54) **PROCEDE DE COMMANDE D'UN MOTEUR DE VEHICULE POUR REGULER LA TEMPERATURE D'UN FILTRE A PARTICULES**
VERFAHREN ZUR STEUERUNG EINES FAHRZEUGMOTORS ZUR REGELUNG DER TEMPERATUR EINES PARTIKELFILTERS
METHOD OF CONTROLLING A VEHICLE ENGINE IN ORDER TO REGULATE THE TEMPERATURE OF A PARTICLE FILTER

(30) Priorité: 25.04.2005 FR 0504113
(43) Date de publication de la demande: 16.01.2008
(73) Titulaire: Renault s.a.s., 92100 Boulogne Billancourt (FR)
(72) Inventeur: DANEAU, Marc, F-92100 Boulogne Billancourt (FR); NOTH, Frédéric, F-92350 Le Plessis Robinson (FR); JULLIARD, Arnaud, F-92310 SEVRES (FR); PILLOT, Adrien, F-92500 Rueil-Malmaison (FR)
(86) Numéro de dépôt international: PCT/FR2006/050384
(87) Numéro de publication internationale: WO 2006/114548

(56) Documents cités:
- WO-A-2004/079170
- DE-U1-202005 001 257
- US-A1- 2004 200 271
- US-A1- 2004 204 818

## Description

L'invention concerne la commande des moteurs de véhicule et en particulier la régénération des filtres à particules des moteurs thermiques. La présente invention concerne notamment un procédé de régénération d'un filtre à particules dans le circuit d'échappement d'un moteur à combustion interne. Elle vise plus particulièrement à maximiser les performances de régénération du filtre à particules, classique ou catalytique.

Les moteurs Diesel, par leur fonctionnement spécifique, émettent (entre autres) dans leur gaz d'échappement des suies polluantes que l'on nomme également particules. Afin de limiter les émissions de ces particules dans l'atmosphère, un filtre est implanté dans la ligne d'échappement, en aval des chambres de combustion du moteur. Ce filtre retient les particules qui s'accumulent en son sein au fur et à mesure de l'utilisation du moteur, d'où son nom : filtre à particules (FAP). Mais cette accumulation de particules dans le filtre crée une contre-pression de plus en plus forte à l'échappement, ce qui diminue considérablement les performances du moteur, et peut même porter atteinte à sa fiabilité.

Pour assurer le fonctionnement d'un filtre à particules et éviter son colmatage par les suies, ce qui dégraderait les performances du moteur, il est nécessaire de procéder périodiquement à une régénération qui consiste à brûler les suies. Cette combustion des suies est provoquée par élévation de la température des gaz d'échappement en entrée du filtre à particules. L'initialisation et le maintien de la combustion des particules dans le filtre s'obtiennent par élévation de la température interne du FAP. Pour ce faire, on procède à une injection retardée dans les chambres de combustion du moteur, c'est-à-dire que l'on retarde l'injection du gasoil par rapport au phasage optimal de l'injection normale. Cela a pour effet d'augmenter la température des gaz à l'échappement. On ajoute également, si besoin est, une ou plusieurs injections tardives, c'est-à-dire que l'on injecte du gasoil longtemps après le point mort haut du piston (PMH). Ce gasoil ne brûlera pas dans la chambre de combustion, mais dans la partie catalytique de la ligne d'échappement. En effet, toujours afin de diminuer les émissions polluantes, on dispose, en plus du filtre à particules, soit d'un catalyseur d'oxydation positionné en amont du FAP dans la ligne d'échappement, soit directement d'un matériau catalytique (tel que le platine) au sein du FAP. C'est sur ces sites catalytiques que les HC et CO des injections tardives s'oxydent en générant un exotherme, ce qui augmente la température des gaz.

On effectue cette opération de régénération du FAP périodiquement, dès que la quantité de particules dans le filtre devient trop importante. La régénération s'effectue lorsque le moteur fonctionne et cela doit être transparent pour l'utilisateur (c'est-à-dire qu'il ne doit pas remarquer que le FAP est en phase de régénération).

Si la température du filtre n'est pas contrôlée avec précision pendant la régénération du FAP, un emballement de la réaction de combustion des particules peut se produire, entraînant une forte augmentation de la température interne et pouvant aboutir à une détérioration du FAP.

Afin d'éviter cela, on gère la régénération du filtre avec une régulation de sa température qui agit sur les quantités et/ou phasages des différentes injections de gasoil, de façon à avoir une température du FAP la plus proche possible d'une température de consigne. Cette consigne est élaborée pour permettre une régénération optimale du FAP, tout en le protégeant des risques d'emballement.

Actuellement, on est capable de réguler l'exotherme produit par la conversion des réducteurs (HC, CO) dans le catalyseur d'oxydation en contrôlant le phasage et le débit des post-injections de carburant dans les cylindres du moteur, ce pour un débit de gaz donné. Les réglages moteur qui permettent d'atteindre la température cible en entrée FAP, résultante de l'exotherme, sont réalisés en régime établi. La régulation adapte à chaque instant les débits nominaux fonction des écarts mesurés par rapport à la consigne de température, ce qui permet notamment de compenser les dispersions de température de moteur à moteur, pour maintenir un niveau thermique maximisant la part de particules brûlées à chaque régénération.

US2004-0204818 décrit un procécé pour contrôler la température d'entrée d'un filtre à particules.

Un but de l'invention est d'améliorer encore les procédés de régulation de la température du filtre à particules en vue de sa régénération.

A cet effet, on prévoit selon l'invention un procédé de commande d'un moteur de véhicule, selon la revendication 1.

Le procédé selon l'invention pourra présenter en outre au moins l'une quelconque des caractéristiques suivantes :
- on prend en compte une mesure de température à l'entrée du filtre, notamment pour l'injection aval ;
- on prend en compte, notamment pour l'injection dans le cylindre ou au moins l'une des injections dans le cylindre, une valeur cartographiée de la température donnée par l'injection aval à un catalyseur placé directement en amont du filtre ;
- on prend en compte, notamment pour l'injection dans le cylindre ou au moins l'une des injections dans le cylindre, une mesure de température à l'entrée d'un catalyseur placé directement en amont du filtre ;
- on commande au moins l'une des injections en tenant compte d'une valeur de base cartographiée de cette commande ;
- on commande au moins l'une des injections en la comparant avec des seuils haut et bas prédéterminés ;
- on limite un débit horaire de l'injection aval pour la maintenir en deçà d'un seuil prédéterminé ;
- on limite un débit de l'injection aval en deçà d'un seuil fonction d'un débit d'air du moteur ;
- l'injection dans le cylindre ou au moins l'une des injections dans le cylindre est agencée pour dégrader un rendement du moteur par référence à un rendement prédéterminé ;
- l'injection dans le cylindre ou au moins l'une des injections dans le cylindre est effectuée après que le piston associé au cylindre a atteint un point mort haut ; et
- le moteur comprend deux catalyseurs d'oxydation.

On prévoit également selon l'invention un moteur de véhicule comprenant les caractéristiques de la revendication 11.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est un schéma montrant l'agencement général d'un moteur selon le mode préféré de réalisation de l'invention ;
- la figure 2 est un schéma montrant l'agencement des catalyseurs et du filtre à particules dans la ligne d'échappement du moteur de la figure 1 ; et
- la figure 3 est un organigramme illustrant les différentes étapes de la régulation de la température du filtre à particules dans le moteur de la figure 1.

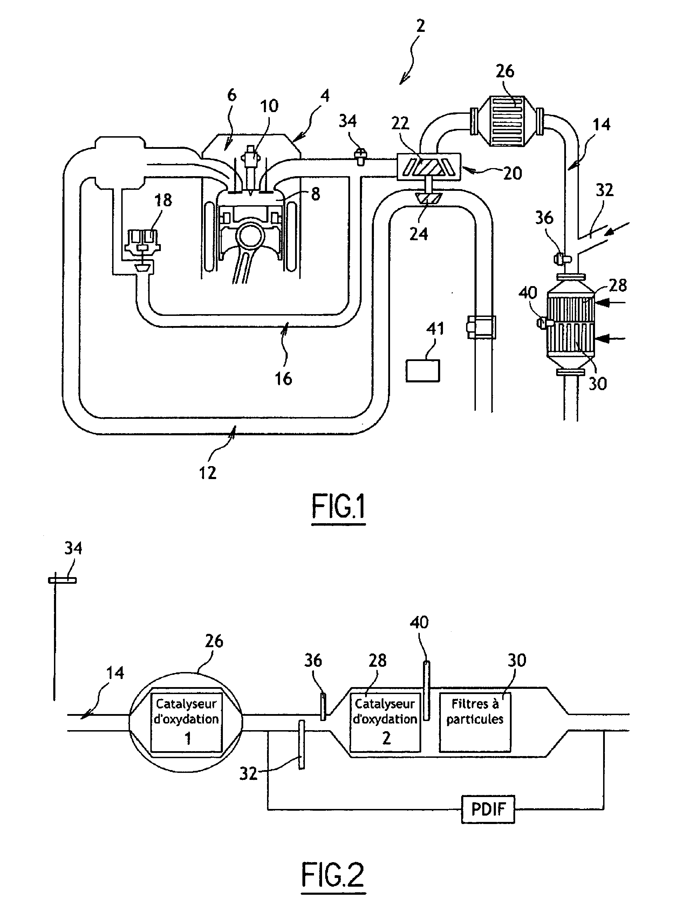

En référence à la figure 1, le moteur 2 du présent mode de réalisation de l'invention comprend une culasse 4 renfermant des cylindres 6 dans lesquels sont montés mobiles des pistons 8 et débouchent des injecteurs de carburant 10.

Le moteur comprend un circuit d'admission 12 débouchant dans les cylindres 6 et un circuit d'échappement 14 dont l'entrée se situe au niveau de ces mêmes cylindres. Le moteur 2 comprend un circuit 16 de recirculation des gaz d'échappement ou EGR permettant de prélever une fraction des gaz d'échappement en sortie des cylindres pour les réinjecter dans le circuit d'admission. Ce circuit d'EGR comprend notamment une vanne commandable 18.

Le moteur 2 comprend un turbocompresseur 20 comprenant une turbine 22 mise en mouvement par les gaz d'échappement parcourant le circuit 14 et reliée à un compresseur 24 produisant une compression des gaz parcourant le circuit d'admission 12.

Le circuit d'échappement 14 comprend un premier catalyseur d'oxydation 26 et un deuxième catalyseur d'oxydation 28 placé en aval du premier. Il comprend également un filtre à particules 30 placé en aval du deuxième catalyseur 28. Ce dernier est contigu au filtre à particules 30. Ce circuit comprend un injecteur de carburant aval 32 permettant d'injecter du carburant directement en aval du premier catalyseur 26 et en amont du deuxième catalyseur 28. Le moteur comprend un capteur de température 34 placé dans le circuit d'échappement en amont de la turbine 22. Il comprend par ailleurs un capteur de température 36 placé en aval de l'injecteur aval 32 et en amont du deuxième catalyseur 28. Il comprend enfin un capteur de température 40 placé en aval du deuxième catalyseur 28 et en amont du filtre à particules 30.

Le moteur comprend un calculateur 41 apte à commander les différents organes du moteur et recevant des données des différents capteurs.

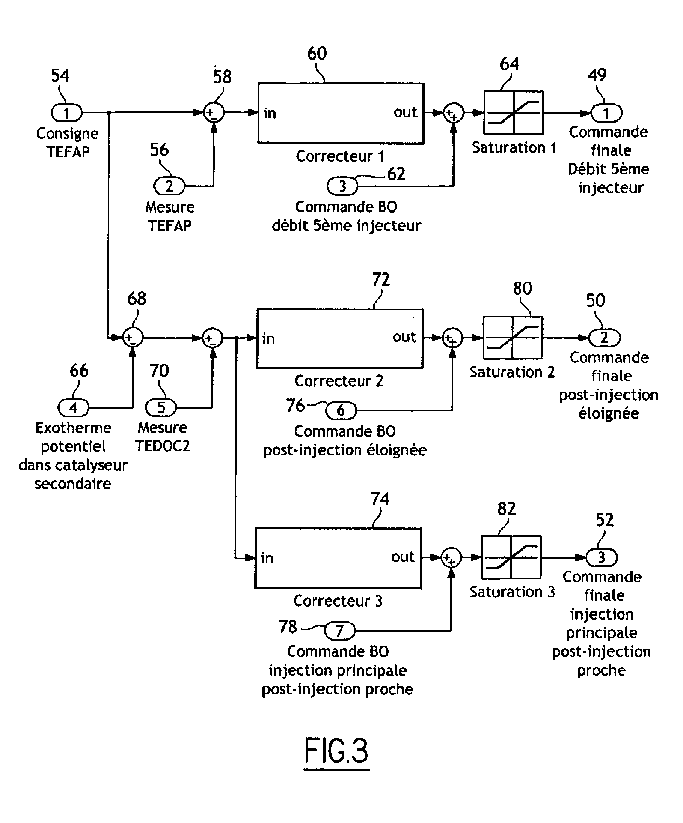

Le procédé dont le déroulement est illustré à la figure 3 est mis en oeuvre dans le moteur de la figure 1 pour réguler la température à l'entrée du filtre à particules 30 en vue d'assurer périodiquement sa régénération.

La commande de régulation s'effectue via la commande du débit de l'injecteur 32 ou cinquième injecteur et de la commande de chacun des quatre injecteurs 10. Concernant ces derniers, il s'agit de commander, en plus de l'injection principale qui produit le couple généré par le moteur, une post-injection éloignée 50 consistant en une injection de carburant dans le cylindre après que le piston associé a atteint le point mort haut ainsi qu'une post-injection proche 52 concomitante à l'injection principale. Il s'agit donc dans ce dernier cas d'injecter une quantité de carburant excédentaire afin de dégrader le rendement du moteur par rapport à un rendement prédéterminé correspondant aux circonstances dans lesquelles la régénération du filtre n'est pas commandée.

On cherche à réaliser par ce procédé un exotherme dans le premier catalyseur 26 pour déclencher l'amorce du deuxième catalyseur 28, ce qui permettra d'atteindre la température cible en entrée du filtre à particules. Il s'agit donc d'effectuer deux régulations : d'une part, une régulation en température à l'entrée du filtre à particules 30, et d'autre part une régulation en température à l'entrée du deuxième catalyseur 28.

Comme illustré à la figure 3, on prend en compte au cours du procédé, en l'espèce pour la mise en oeuvre de chacune des commandes 49, 50, 51 une valeur de température de consigne 54 du filtre à particules. On prend également en compte une mesure de température 56 fournie par le capteur 40 en entrée du filtre à particules 30. Cette mesure 56 est soustraite à la valeur 54 à l'étape 58, puis donne lieu à une correction dans le bloc 60 qui est par exemple un bloc de type proportionnel-intégral-dérivé ou PID. On prend également en compte une valeur de base cartographiée ou valeur de commande en boucle ouverte stockée dans une mémoire du calculateur. Cette valeur de base 62 de la commande 49 est ajoutée à la valeur provenant du bloc 60. La somme de ces deux valeurs est comparée à des seuils haut et bas prédéterminés au cours de l'étape représentée par le bloc 64. Si elle franchit l'un de ces seuils, cette valeur est remplacée par le seuil correspondant. On obtient finalement la valeur 49 pour la commande du débit du cinquième injecteur 32.

Cette régulation est chargée de maintenir un niveau thermique optimal pour la combustion des suies dans le filtre à particules. Pour cela, on commande le débit injecté à l'échappement en fonction des conditions thermiques qui règnent en sortie du catalyseur secondaire et à l'entrée du filtre à particules.

Pour le calcul des valeurs des commandes 50 et 52, on prend également en compte une valeur cartographiée 66 de la température donnée au catalyseur 28 par l'injection effectuée au niveau de l'injecteur 32. Il s'agit ici de prendre en compte l'exotherme potentiel généré dans ce deuxième catalyseur 28 et de répartir au maximum la sollicitation sur le cinquième injecteur 32. La valeur 66 de cet exotherme est fournie par une cartographie et soustraite de la valeur 54 au niveau de l'opérateur 68. La valeur qui en résulte est prise comme température de consigne pour les commandes 50 et 52. Ensuite, on soustrait de la valeur 70 ainsi obtenue la valeur de la mesure fournie par le capteur 36 situé à l'entrée du deuxième catalyseur 28.

La valeur qui en résulte est ensuite transmise à deux blocs de correction 72 et 74 qui peuvent être chacun constitués par des blocs PID associés chacun aux commandes 50 et 52. La valeur émanant de ces blocs est additionnée à une valeur de base 76, 78 de la commande concernée, valeur qui résulte d'une cartographie, c'est-à-dire qui est constituée par une commande en boucle ouverte. Sur chacune des branches, la valeur en résultant passe ensuite à travers un bloc de saturation 80, 82 pour être comparée à des seuils et éventuellement remplacée par un de ceux-ci comme précédemment. On obtient ensuite les valeurs finales des commandes 50 et 52.

La deuxième partie de la régulation qui vient d'être décrite vise à commander les débit et phasage des post-injections dans les cylindres, respectivement post-injection éloignée 50 et post-injection proche 52 intégrées à l'injection principale. Cette régulation est chargée de réaliser un objectif thermique à l'entrée du deuxième catalyseur 28 de sorte que ce dernier soit à chaque instant en état d'amorçage pour pouvoir traiter le carburant introduit dans l'échappement par l'injecteur aval 32. Outre la condition d'amorçage, cet objectif thermique intègre également une partie de la thermique attendue en l'entrée du filtre à particules qui ne peut pas être assurée intégralement par l'exotherme du catalyseur secondaire 28.

On remarquera que, pour minimiser le niveau de dilution d'huile par le carburant induit par les post-injections, on préfère en l'espèce solliciter au maximum l'injecteur aval 32. C'est la raison pour laquelle la consigne de température utilisée en aval du bloc 68 est en fait la consigne de température en entrée du filtre 30 diminuée de l'exotherme qu'on sera capable de générer dans le catalyseur secondaire grâce au cinquième injecteur 32. On vise en particulier à faire assurer la sollicitation thermique au maximum par le cinquième injecteur.

Pour éviter que l'exotherme du catalyseur secondaire 28 ne dépasse les 350°C, on limite en l'espèce le débit horaire maximal du cinquième injecteur 32 à un seuil prédéterminé.

Enfin, afin d'éviter que des HC ou des CO ne se retrouvent en entrée du filtre à particules, on limite le débit du cinquième injecteur à un seuil prédéterminé en fonction du débit d'air du moteur.

Bien entendu, on pourra apporter à l'invention de nombreuses modifications sans sortir du cadre qui fait l'objet des revendications.

## Revendications

1. Procédé de commande d'un moteur de véhicule comprenant deux catalyseurs d'oxydation (26, 28) situés en amont d'un filtre à particules (30), **caractérisé en ce qu'**on régule une température d'entrée du filtre à particules (30) du moteur en commandant au moins une injection de carburant (50, 52) dans un cylindre (6) du moteur et une injection de carburant (49) directement en aval d'un premier catalyseur d'oxydation (26) du moteur,
on prend en compte une valeur (54) de température de consigne du filtre (30) pour au moins l'une des injections (49, 50, 52),
on détermine la quantité de carburant à injecter directement en aval du premier catalyseur d'oxydation (26) en fonction de l'exotherme potentiel dans le deuxième catalyseur d'oxydation (28) et de la valeur (54) de température de consigne du filtre (30), la quantité de carburant à injecter directement en aval du premier catalyseur d'oxydation (26) permettant d'obtenir une température du filtre à particules la plus proche possible de la valeur (54) de température de consigne du filtre (30),
on régule la quantité de carburant à injecter (50, 52) dans un cylindre (6) du moteur en fonction de la différence entre la valeur de température de consigne (54) du filtre et la valeur de l'exotherme potentiel généré dans le deuxième catalyseur d'oxydation (28).

2. Procédé selon l'une quelconque des revendications précédentes, **caractérisé en ce qu'**on prend en compte une mesure (56) de température à l'entrée du filtre (30), notamment pour l'injection aval (49).

3. Procédé selon l'une quelconque des revendications précédentes, **caractérisé en ce qu'**on prend en compte, notamment pour l'injection dans le cylindre ou au moins l'une des injections (50, 52) dans le cylindre, une valeur cartographiée (66) de la température donnée par l'injection aval (49) à un catalyseur (28) placé directement en amont du filtre.

4. Procédé selon l'une quelconque des revendications précédentes, **caractérisé en ce qu'**on prend en compte, notamment pour l'injection dans le cylindre ou au moins l'une des injections (50, 52) dans le cylindre, une mesure (70) de température à l'entrée d'un catalyseur (28) placé directement en amont du filtre (30).

5. Procédé selon l'une quelconque des revendications précédentes, **caractérisé en ce qu'**on commande au moins l'une des injections (49, 50, 52) en tenant compte d'une valeur de base cartographiée (62, 76, 78) de cette commande.

6. Procédé selon l'une quelconque des revendications précédentes, **caractérisé en ce qu'**on commande au moins l'une des injections (49, 50, 52) en la comparant avec des seuils haut et bas prédéterminés.

7. Procédé selon l'une quelconque des revendications précédentes, **caractérisé en ce qu'**on limite un débit horaire de l'injection aval (49) pour la maintenir en deçà d'un seuil prédéterminé.

8. Procédé selon l'une quelconque des revendications précédentes, **caractérisé en ce qu'**on limite un débit de l'injection aval (49) en deçà d'un seuil fonction d'un débit d'air du moteur.

9. Procédé selon l'une quelconque des revendications précédentes, **caractérisé en ce que** l'injection dans le cylindre ou au moins l'une (52) des injections (50, 52) dans le cylindre est agencée pour dégrader un rendement du moteur par référence à un rendement prédéterminé.

10. Procédé selon l'une quelconque des revendications précédentes, **caractérisé en ce que** l'injection dans le cylindre ou au moins l'une (50) des injections (50, 52) dans le cylindre (6) est effectuée après que le piston (8) associé au cylindre a atteint un point mort haut.

11. Moteur de véhicule comprenant au moins un injecteur de carburant de cylindre (10), deux catalyseurs d'oxydation (26, 28) situés en amont d'un filtre à particules (30)et un filtre à particules (30), **caractérisé en ce qu'**il comprend un injecteur (32) de carburant en aval du premier catalyseur et un organe de commande (41) agencé pour réguler une température d'entrée du filtre (30) en commandant l'injecteur de cylindre (10) et l'injecteur aval (32),
l'organe de commande (41) comprenant
un moyen de prise en compte de la température de consigne du filtre (30) pour au moins l'une des injections (49, 50, 52),
un moyen de détermination apte à déterminer la quantité de carburant à injecter directement en aval du premier catalyseur d'oxydation (26) en fonction de l'exotherme potentiel dans le deuxième catalyseur d'oxydation (28) et de la valeur (54) de température de consigne du filtre (30), la quantité de carburant à injecter directement en aval du premier catalyseur d'oxydation (26) permettant d'obtenir une température du filtre à particules la plus proche possible de la valeur (54) de température de consigne du filtre (30), et
un moyen de régulation de la quantité de carburant à injecter (50, 52) dans un cylindre (6) du moteur en fonction de la différence entre la valeur de température de consigne (54) du filtre et la valeur de l'exotherme potentiel généré dans le deuxième catalyseur d'oxydation (28).

## Claims

1. Method for controlling a vehicle engine comprising two oxidation catalytic converters (26, 28) situated upstream of a particulate filter (30), **characterized in that** an inlet temperature of a particulate filter (30) of the engine is regulated by commanding at least one injection of fuel (50, 52) into a cylinder (6) of the engine and an injection of fuel (49) directly downstream of a first oxidation catalytic converter (26) of the engine,
a reference temperature (54) of the filter (30) is taken into consideration for at least one of the injections (49, 50, 52),
the quantity of fuel to be injected directly downstream of the first oxidation catalytic converter (26) is determined as a function of the exothermic potential in the second oxidation catalytic converter (28) and of the reference temperature (54) of the filter (30), the quantity of fuel to be injected directly downstream of the first oxidation catalytic converter (26) making it possible to obtain a particulate filter temperature that is as close as possible to the reference temperature (54) of the filter (30),
the quantity of fuel to be injected (50, 52) into a cylinder (6) of the engine is regulated as a function of the difference between the reference temperature (54) of the filter and the value of the exothermic potential generated in the second oxidation catalytic converter (28).

2. Method as claimed in Claim 1, **characterized in that** a temperature measurement (56) at the inlet of the filter (30) is taken into consideration, particularly for the downstream injection (49).

3. Method as claimed in any one of the preceding claims, **characterized in that** a mapped value (66) of the temperature given by the downstream injection (49) at a catalytic converter (28) positioned directly upstream of the filter is taken into consideration, particularly for the injection into the cylinder or at least one of the injections (50, 52) into the cylinder.

4. Method as claimed in any one of the preceding claims, **characterized in that** a measurement (70) of the temperature at the inlet of a catalytic converter (28) positioned directly upstream of the filter (30) is taken into consideration, particularly for the injection into the cylinder or at least one of the injections (50, 52) into the cylinder.

5. Method as claimed in any one of the preceding claims, **characterized in that** at least one of the injections (49, 50, 52) is commanded on the basis of a mapped base value (62, 76, 78) of this command.

6. Method as claimed in any one of the preceding claims, **characterized in that** at least one of the injections (49, 50, 52) is commanded by comparing it against predetermined upper and lower thresholds.

7. Method as claimed in any one of the preceding claims, **characterized in that** an hourly flow rate of the downstream injection (49) is limited in order to keep it below a predetermined threshold.

8. Method as claimed in any one of the preceding claims, **characterized in that** a flow rate of the downstream injection (49) is limited to below a threshold that is a function of the engine air flow rate.

9. Method as claimed in any one of the preceding claims, **characterized in that** the injection into the cylinder or at least one (52) of the injections (50, 52) into the cylinder is designed to downgrade the efficiency of the engine by reference to a predetermined efficiency.

10. Method as claimed in any one of the preceding claims, **characterized in that** the injection into the cylinder or at least one (50) of the injections (50, 52) into the cylinder (6) is performed after the piston (8) associated with the cylinder has reached top dead center.

11. Vehicle engine comprising at least one cylinder fuel injector (10), two oxidation catalytic converters (26, 28) situated upstream of a particulate filter (30) and one particulate filter (30), **characterized in that** it comprises an injector (32) for injecting fuel downstream of the first catalytic converter and a control member (41) designed to regulate an inlet temperature of the filter (30) by commanding the cylinder injector (10) and the downstream injector (32),
the control member (41) comprising:
a means of taking the reference temperature (54) of the filter (30) into consideration for at least one of the injections (49, 50, 52),
a determining means able to determine the quantity of fuel to be injected directly downstream of the first oxidation catalytic converter (26) as a function of the exothermic potential in the second oxidation catalytic converter (28) and of the reference temperature (54) of the filter (30), the quantity of fuel to be injected directly downstream of the first oxidation catalytic converter (26) making it possible to obtain a particulate filter temperature that is as close as possible to the reference temperature (54) of the filter (30), and
a means of regulating the quantity of fuel to be injected (50, 52) into a cylinder (6) of the engine as a function of the difference between the reference temperature (54) of the filter and the value of the exothermic potential generated in the second oxidation catalytic converter (28).

## Patentansprüche

1. Verfahren zum Steuern eines Fahrzeugsmotors, der zwei Oxidationskatalysatoren (26, 28) enthält, die einem Partikelfilter (30) vorgeschaltet sind, **dadurch gekennzeichnet, dass** eine Eingangstemperatur des Partikelfilters (30) des Motors reguliert wird, indem mindestens eine Kraftstoffeinspritzung (50, 52) in einen Zylinder (6) des Motors und eine Kraftstoffeinspritzung (49) direkt hinter einem ersten Oxidationskatalysator (26) des Motors gesteuert wird,
ein Solltemperaturwert (54) des Filters (30) für mindestens eine der Einspritzungen (49, 50, 52) berücksichtigt wird,
die Menge von direkt hinter dem ersten Oxidationskatalysator (26) einzuspritzendem Kraftstoff abhängig von der potenziellen exothermen Reaktion im zweiten Oxidationskatalysator (28) und vom Solltemperaturwert (54) des Filters (30) bestimmt wird, wobei die Menge von direkt hinter dem ersten Oxidationskatalysator (26) einzuspritzendem Kraftstoff es ermöglicht, eine Temperatur des Partikelfilters zu erhalten, die dem Solltemperaturwert (54) des Filters (30) am nächsten liegt,
die Menge von in einen Zylinder (6) des Motors einzuspritzendem Kraftstoff (50, 52) abhängig von der Differenz zwischen dem Solltemperaturwert (54) des Filters und dem Wert der potenziellen exothermen Reaktion reguliert wird, die im zweiten Oxidationskatalysator (28) erzeugt wird.

2. Verfahren nach Anspruch 1, **dadurch gekennzeichnet, dass** eine Temperaturmessung (56) am Eingang des Filters (30) insbesondere für die hintere Einspritzung (49) berücksichtigt wird.

3. Verfahren nach einem der vorhergehenden Ansprüche, **dadurch gekennzeichnet, dass** insbesondere für die Einspritzung in den Zylinder oder mindestens eine der Einspritzungen (50, 52) in den Zylinder ein Kennfeldwert (66) der durch die hintere Einspritzung (49) an einen direkt vor dem Filter angeordneten Katalysator (28) gegebenen Temperatur berücksichtigt wird.

4. Verfahren nach einem der vorhergehenden Ansprüche, **dadurch gekennzeichnet, dass** insbesondere für die Einspritzung in den Zylinder oder mindestens eine der Einspritzungen (50, 52) in den Zylinder eine Temperaturmessung (70) am Eingang eines direkt vor dem Filter (30) angeordneten Katalysators (28) berücksichtigt wird.

5. Verfahren nach einem der vorhergehenden Ansprüche, **dadurch gekennzeichnet, dass** mindestens eine der Einspritzungen (49, 50, 52) unter Berücksichtigung eines Basiskennfeldwerts (62, 76, 78) dieser Steuerung gesteuert wird.

6. Verfahren nach einem der vorhergehenden Ansprüche, **dadurch gekennzeichnet, dass** mindestens eine der Einspritzungen (49, 50, 52) gesteuert wird, indem sie mit vorbestimmten oberen und unteren Schwellen verglichen wird.

7. Verfahren nach einem der vorhergehenden Ansprüche, **dadurch gekennzeichnet, dass** eine Stundenleistung der hinteren Einspritzung (49) begrenzt wird, um sie unterhalb einer vorbestimmten Schwelle zu halten.

8. Verfahren nach einem der vorhergehenden Ansprüche, **dadurch gekennzeichnet, dass** ein Durchsatz der hinteren Einspritzung (49) unter einer Schwelle begrenzt wird, die von einem Luftdurchsatz des Motors abhängig ist.

9. Verfahren nach einem der vorhergehenden Ansprüche, **dadurch gekennzeichnet, dass** die Einspritzung in den Zylinder oder mindestens eine (52) der Einspritzungen (50, 52) in den Zylinder eingerichtet ist, um eine Leistung des Motors durch Bezug auf eine vorbestimmte Leistung herabzustufen.

10. Verfahren nach einem der vorhergehenden Ansprüche, **dadurch gekennzeichnet, dass** die Einspritzung in den Zylinder oder mindestens eine (50) der Einspritzungen (50, 52) in den Zylinder (6) durchgeführt wird, nachdem der dem Zylinder zugeordnete Kolben (8) einen oberen Totpunkt erreicht hat.

11. Fahrzeugmotor, der mindestens eine Zylinder-Kraftstoffeinspritzdüse (10), zwei einem Partikelfilter (30) vorgeschaltete Oxidationskatalysatoren (26, 28) und einen Partikelfilter (30) enthält, **dadurch gekennzeichnet, dass** er eine Kraftstoffeinspritzdüse (32) hinter dem ersten Katalysator und ein Steuerorgan (41) enthält, das eingerichtet ist, um eine Eingangstemperatur des Filters (30) zu regulieren, indem es die Zylindereinspritzdüse (10) und die hintere Einspritzdüse (32) steuert,
wobei das Steuerorgan (41) enthält
eine Einrichtung zur Berücksichtigung der Solltemperatur des Filters (30) für mindestens eine der Einspritzungen (49, 50, 52),
eine Bestimmungseinrichtung, die die direkt hinter dem ersten Oxidationskatalysator (26) einzuspritzende Kraftstoffmenge abhängig von der potenziellen exothermen Reaktion im zweiten Oxidationskatalysator (28) und vom Solltemperaturwert (54) des Filters (30) bestimmen kann, wobei die direkt hinter dem ersten Oxidationskatalysator (26) einzuspritzende Kraftstoffmenge es ermöglicht, eine Temperatur des Partikelfilters zu erhalten, die dem Solltemperaturwert (54) des Filters (30) am nächsten liegt, und
eine Einrichtung zur Regulierung der in einen Zylinder (6) des Motors einzuspritzenden Kraftstoffmenge (50, 52) abhängig von der Differenz zwischen dem Solltemperaturwert (54) des Filters und dem Wert der potenziellen exothermen Reaktion, die im zweiten Oxidationskatalysator (28) erzeugt wird.
